# EUROPEAN PATENT SPECIFICATION

(11) **EP 3 505 826 B1**
(45) Date of publication and mention of the grant of the patent: **26.02.2025**
(21) Application number: 18215871.7
(22) Date of filing: 24.12.2018
(51) Int. Cl.: F23R 3/00

(54) **COMBUSTOR FOR A GAS TURBINE AND GAS TURBINE FOR POWER PLANT COMPRISING SUCH A COMBUSTOR**
BRENNKAMMER EINER GASTURBINE UND GASTURBINE FÜR EIN KRAFTWERK AUFWEISEND EINER SOLCHEN BRENNERKAMMER
CHAMBRE DE COMBUSTION POUR TURBINE À GAZ ET TURBINE À GAZ POUR CENTRALE ÉLECTRIQUE AVEC UNE TELLE CHAMBRE DE COMBUSTION

(30) Priority: 26.12.2017 RU 2017145773
(43) Date of publication of application: 03.07.2019
(73) Proprietor: Ansaldo Energia Switzerland AG, 5400 Baden (CH)
(72) Inventor: GAUPP, Christoph, 8050 ZURICH (CH); MAURER, Michael Thomas, 79713 BAD SAECKINGEN (DE); OKUNEV, Alexey Alexandrovich, 111141 MOSCOW (RU); KNÖPFEL, Hans Peter, 5605 DOTTIKON (CH)
(74) Representative: Studio Torta S.p.A.

(56) References cited:
- EP-A1- 2 208 927
- US-A1- 2004 045 295
- US-A1- 2012 117 976
- US-A1- 2014 338 342

## Description

### CROSS-REFERENCE TO RELATED APPLICATIONS

This application claims priority from Russian Patent Application No. 2017145773 filed on December 26, 2017.

### BACKGROUND OF THE INVENTION

### Field of the Invention

The present invention relates to a sequential can combustor for a gas turbine for power plants. In particular, the present invention relates to a sequential can combustor for a gas turbine comprising a premix burner and to the gas turbine for power plants comprising such a sequential can combustor.

### Description of the prior art

As known, a gas turbine assembly for power plants (in the following only gas turbine) comprises a rotor having an axis and provided with an upstream compressor sector, a combustor sector and a downstream turbine sector. The terms downstream and upstream refer to the direction of the main gas flow passing through the gas turbine. In particular, the compressor comprises an inlet supplied with air and a plurality of blades compressing the passing air. The compressed air leaving the compressor flows into a plenum, i.e. a closed volume delimited by an outer casing, and from there into the combustor. Inside the combustor, the compressed air is mixed with at least one fuel. The mixture of fuel and compressed air flows into a combustion chamber where this mixture is combusted. The resulting hot gas leaves the combustor and is expanded in the turbine performing work on the rotor.

In order to achieve a high efficiency, a high turbine inlet temperature is required. However, due to this high temperature, high NOx emissions are generated.

In order to reduce these emissions and to increase operational flexibility, today is known a particular kind of gas turbines performing a sequential combustion cycle.

In general, a sequential gas turbine comprises two combustors in series wherein each combustor is provided with the relative burner and combustion chamber. Following the main gas flow direction, the upstream combustor is called "premix" combustor and is fed by the compressed air. The downstream combustor is called "sequential" or "reheat" combustor and is fed by the hot gas leaving the first combustion chamber. According to a first kind of sequential gas turbines, the two combustors are physically separated by a stage of turbine blades, called high pressure turbine.

Today a second kind of sequential gas turbines is known wherein this kind of gas turbines is not provided with the high pressure turbine and the premix and the reheat burner are arranged directly one downstream the other inside a common can-shaped casing. According to this kind of sequential gas turbines, a plurality of can combustors are arranged as a ring around the rotor axis. Each can-combustor is provided with a liner, i.e. the casing limiting the combustion chambers, divided in two portions respectively upstream and downstream with respect to the reheat burner. The upstream portion of the liner is called premix liner whereas the downstream portion is called sequential liner and is downstream connected with a flange, called picture frame, facing the turbine. Usually, the sequential liner and the picture frame are realized as a single piece called transition duct configured for guiding the hot gas leaving the combustor towards the turbine, in particular towards the first vane of the turbine. For instance, the reheat burner can be realized in form of a plurality of single or dual fuel injector fingers extending across the flow channel. Preferably, these injector fingers can be realized in form of a streamline body having preferably a lobed trailing edge. Due to the high hot gas temperature, the reheat burner is not provided with any sparker and the combustion starts as a self combustion.

Of course, it is possible to realize a can combustor with a single combustion stage and accordingly comprising a single burner and a single liner defining a single combustion chamber.

The above-described different kinds of gas turbines, i.e. the can combustor with a single or two combustion stages, have been cited because the burner disclosed can be used as the single burner or as the premix burner in these two different kinds of can combustors.

Usually the premix burner in subsequent can combustor, or the single burner in single can combustor, has a burner axis and comprises an inlet fed by compressed air and an outlet for discharging a mixture of air and fuel in a combustion chamber. The burner comprises at least a fuel injector, preferably a plurality of gas and/or oil injectors, configured for injecting fuel in the air flow passing through the burner. In order to have an improved mixing of the air with the fuel, it is known to provide the burner with a swirl generator, configured for generating an axial swirl flow of air or of a mixture of air and fuel entering in the combustion chamber. The burner comprises a casing, configured for limiting/containing the swirl flow and for being coupled with the combustor chamber casing, and an axial lance extending along the axis substantially up to the combustion chamber, i.e. substantially in axial flush with the burner outlet. This kind of lance is also called "bluff body". Preferably, such a lance is provided with any inner channels configured for guiding carrying air, oil fuel and/or gas fuel to the lance tip. From the lance tip, the oil and/or the gas fuel are injected in the swirl flow entering the combustion chamber. The zone over the lance tip, where the mixture air/fuel occurs, is called "bluff body recirculation zone", due to the fact that the lance is configured to realize a recirculation vortex breakdown at the lance tip. In order to start the combustion process in the combustion chamber, the combustor is provided with, at least, a spark generator, usually integrated in a particular lance called "torch".

According to the prior art practice, the spark generator is arranged downstream the fuel injection, i.e. downstream the lance tip, at a first portion of the combustion chamber. In particular, in this arrangement, the spark generator support torch is disposed radially with respect to the combustor axis. In order to reach the gas to be combusted, the torch passes through a hole obtained in several liner walls of the combustion chamber.

The above mentioned prior art disposition of the torch providing the spark generator involves some drawbacks. Indeed, the through holes obtained in the liner walls supporting the torch may generate hot gas leakages. Moreover, the spark generator is located in the combustion chamber and therefore is in direct contact with the hot combustion gas. In this condition, the spark generator may be affected by oxidation. Moreover, the liner walls supporting the torch are subjected to different temperature, for instance the inner liner hot shell is hotter than the outer liner cold shell. In this condition, an uneven axial displacement of the hole supporting the torch may occur with an undue wear of the liner walls.

Starting from this prior art practice, there is today the need to improve the described burner with the central lance (bluff body) in order to overcome the foregoing mentioned drawbacks.

US2012117976 discloses a burner for a can combustor gas turbine comprising a body lance provided with a tip wherein the tip comprises at least a spark generator.

EP 2 208 927 A1 discloses a sequential can combustor for a gas turbine according to the preamble of claim 1.

### SUMMARY OF THE INVENTION

A primary object of the present invention is to provide a can combustor of a gas turbine power plant. The can combustor according the present invention is a sequential can combustor comprising a premix burner. The burner is cylindrical shaped and has an axis that also correspond to the main axial air/gas direction. Upstream with respect to the air flow direction, the burner comprises an inlet fed by compressed air, in particular compressed air delivered in the plenum by the compressor. Downstream with respect to the air flow direction, the burner comprises a outlet facing a combustion chamber. Passing through the burner outlet, the gas leaves the burner and enters the combustion chamber. The burner according the invention is provided with a bluff body lance, i.e. a lance having a body extending along the burner axis and having a downstream portion, with a tip, substantially at the burner outlet and configured for realizing a recirculation zone for air and fuel mixture. In other words, along the axial direction the lance tip is substantial in flush with the inlet of the combustion chamber. The burner is also provided with at least a fuel injector, preferably a plurality of gas and/or oil fuel injectors, for injecting fuel in the air flow passing through the burner. The burner moreover comprises a casing surrounding the lance and forming an annular cavity at least around the lance downstream portion. Additionally, the burner comprises a swirl generator configured for generating an axial swirl flow in the annular cavity.

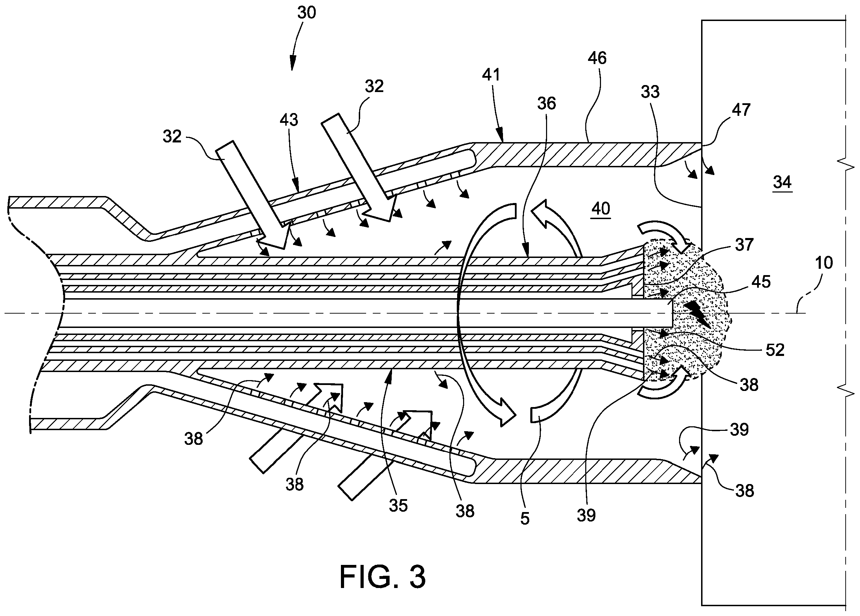

The above listed burner features are known in state of the art and refer both to a burner having a tubular casing, called "axial swirler burner", or a V diverging casing, called "EV burner". A detailed description of these two different kinds of burners will be stated below with reference to figures 3 (part of the invention) and 4 (not part of the invention) showing respectively a EV burner and an axial swirler burner.

According to the invention, the burner further comprises at least a spark generator at the lance tip. Therefore the spark generator is integrated in the lance and is axially facing the combustion chamber.

Placing the sparker at the lance tip provides a plurality of advantages with respect to the prior art practice wherein the torch is radially disposed in the combustion chamber downstream the lance tip. Indeed, according to the invention, the sparker is located in a flame stable zone and therefore enables reliable ignition conditions. The sparker is not arranged in the combustion chamber and therefore the risk of wear and oxidation is minimized. Moreover, the sparker needs only axial compensation in order to accommodate thermal expansions.

According to a preferred embodiment of the invention, the swirl generator comprises a plurality of streamline bodies configured for swirling the compressed air passing through the annular cavity. These streamline bodies may be connected to the outer surface of the lance and/or to the inner surface of the casing. In this example, the fuel injectors may be located at the streamline bodies and/or at the lanced tip and/or at the outer casing.

According to the invention, the casing, or outer casing, comprises an intermediate portion configured for acting as a swirl generator for swirling the compressed air passing through the outer casing. The swirl portion of the casing is V diverging shaped and is followed by a tubular or diffusion portion. The fuel injectors may be located at the V diverging shaped portion of the outer casing and/or at the lanced tip.

Preferably, the lance tip may be provided with carrying or cooling air injecting holes and along the axis the spark generator is protruding the lance tip surface.

Moreover, the lance tip is provided with a temperature sensor and/or a pressure sensor and/or a flame sensor.

The present invention refers to a sequential can combustor provided with a premix burner as foregoing described, and to a gas turbine for power plants comprising such a can combustor.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF DRAWINGS

Further benefits and advantages of the present invention will become apparent after a careful reading of the detailed description with appropriate reference to the accompanying drawings.

The invention itself, however, could be better understood by reference to the following detailed description of the invention, which describes an exemplary embodiment of the invention, taken in conjunction with the accompanying drawings, in which:
- figure 1 is a schematic view of a gas turbine for power plants provided with a can combustor having a single combustion stage and not part of the present invention;
- figure 2 is a schematic view of a can combustor for a gas turbine for power plants provided in series with a premix and a reheat burner;
- figure 3 is an sectional view of an embodiment according to the invention;
- figure 4 is a schematic view of an embodiment not part of the invention;
- figure 5 and 6 are schematic views of two examples of lance tips according to the invention.

### DETAILED DESCRIPTION OF DRAWINGS

In cooperation with the attached drawings, the technical contents and detailed description of the present invention are described thereinafter according to preferable embodiments, being not used to limit its executing scope.

Reference will now be made to the enclosed drawings to describe the present invention in detail.

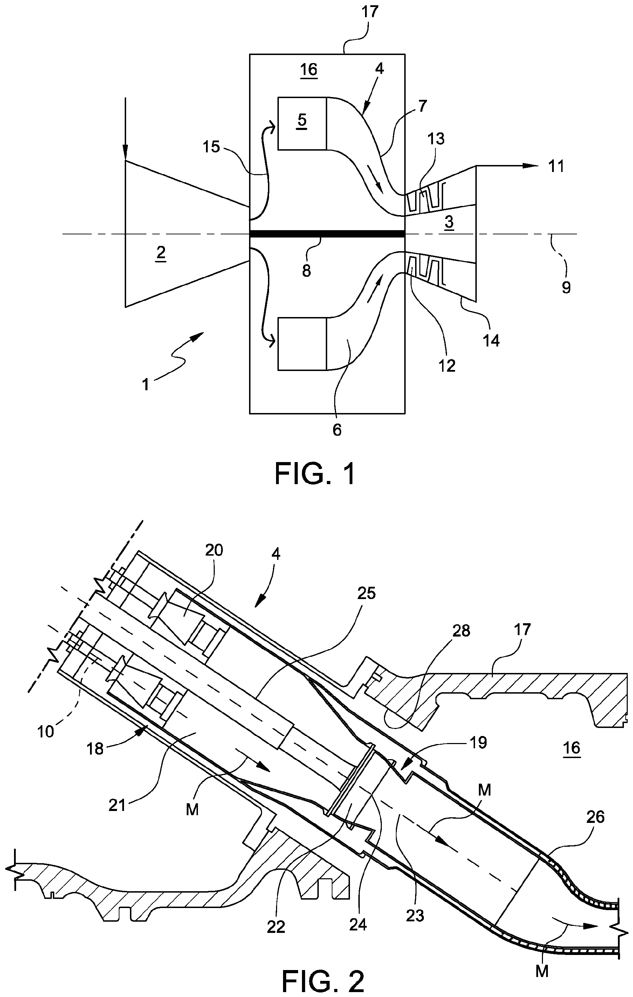

Reference is now made to Fig. 1 that is a schematic view of a gas turbine for power plants that can be provided with a can combustor according to the present invention. In particular, figure 1 discloses a gas turbine 1, having an axis 9 and comprising a compressor 2, a combustor sector 4 and a turbine 3. As known, the compressor comprises an inlet fed by ambient air that, once compressed, leaves the compressor 2 and enters in a plenum 16, i.e. a volume define by an outer casing 17. From the plenum 16, the compressed air 15 enters in the combustor sector that comprises a plurality of can combustors 4 annularly arranged around the axis 9. The terms downstream and upstream refer to the gas main flow direction. Each can combustor 4 comprises at least a burner 5, where the compressed air is mixed with at least a fuel. This mixture is then combusted in a combustion chamber 6 and the resulting hot gas flows in a transition duct 7 downstream connected to the turbine 3. The turbine 3 comprises a plurality of vanes 12, i.e. stator blades, supported by a vane carrier 14, and a plurality of blades 13, i.e. rotor blades, supported by a rotor 8. In the turbine 3, the hot gas expands performing work on the rotor 8 and leaves the turbine 3 in form of exhaust gas 11.

Reference is now made to figure 2 that is a schematic view of a can combustor that can be applied in the gas turbine of the figure 1 and that could be provided with a premix burner.

In particular, figure 2 discloses a can combustor 4 having an axis 24 and comprising a combustor outer casing connected to a relative portal hole 28 of an outer casing 17 defining the plenum 16 where the compressed air is delivered by the compressor 2. The can combustor 4 comprises in series along the gas flow M a first combustor, or premix combustor 18, and a second combustor, or reheat combustor 19. In particular, the first combustor 18 comprises a first or premix burner 20 and a first combustion chamber 21. The reheat combustor 19 comprises a reheat burner 22 and a second combustion chamber 23. According to the embodiment of the figure 2, the fuel is fed to the reheat burner 22 by a fuel lance 25 axially extending through the first combustion chamber 21 up to the reheat burner 22. Downstream the second combustion chamber 23 the can combustor 4 comprises a transition duct 26 for guiding the hot gas flow to the turbine 3. Of course, the present invention can be applied also in other kinds of sequential can combustors wherein the fuel is fed to the reheat burner 22 by pipes arranged outside the combustion chamber.

Reference is now made to figure 3 that is a schematic view of a burner of a can combustor according to a first embodiment of the invention. This burner 30 is called EV burner and comprises an axis 10 and a lance 35, or torch, extending long the axis 10 substantially up to the burner discharge outlet 33 connected to the combustion chamber 34. This burner 30 comprises a casing 41 surrounding the downstream portion 36 of the lance and defining an annular cavity 40 around the lance 35. In this example, the casing 41 and the lance 35 are realized as a single piece and are each other connected to an intermediate portion of the lance 35. According to the figure 3, the casing 41 comprises a V diverging portion 43 downstream followed by a tubular portion 46 connected to the combustion chamber 34. Along the V diverging portion 43 the casing 41 is provided with inlet ports for the compressed air (represented in figure 3 with the arrow 32) and this V diverging portion 43 is configured to generate an axial swirl S in the cavity 40 around the lance 35. The V diverging portion 43 is also provided with a plurality of fuel gas injecting holes 38 facing the cavity 40 connected to a gas supply channel obtained inside the casing 41. Alternatively, or in combination, also the downstream end 47 of the casing 41 may be provided with fuel gas injecting holes 38 and/or oil fuel injectors 39. Alternatively, or in combination, to the above mentioned fuel supply system, the lance 35 may be provided with inner channels for feeding air 52, gas fuel 28 and oil fuel 39 to the lance tip 37 that is provided with relative injecting holes or injectors. The lance tip 37 is in a recessed position along the axial direction with respect to the casing end 47 and is provided with a sparker 45 protruding the lance tip surface towards the combustion chamber 34.

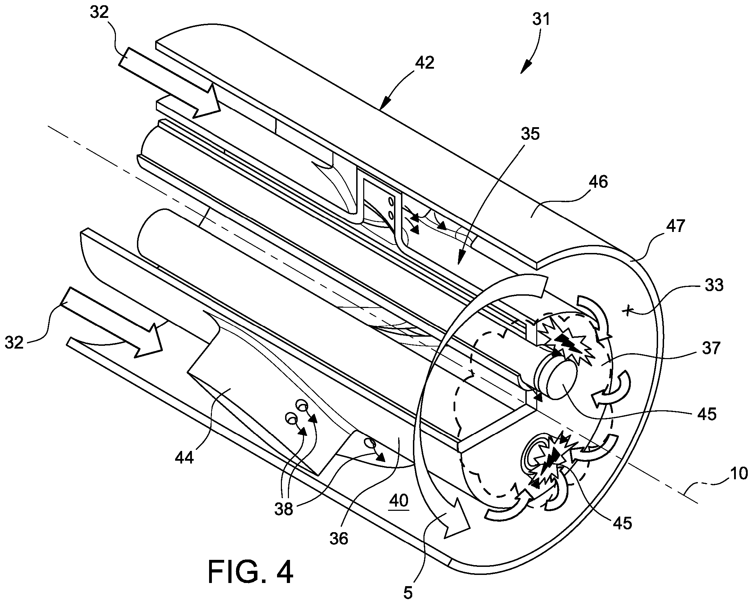

Reference is now made to figure 4 that is a schematic view of an embodiment of a burner not part of the invention. This burner 31 is called axial swirler burner and comprises an axis 10 and a lance 35, or torch, extending long the axis 10 substantially up to the burner discharge outlet 33 connected to the combustion chamber 34. This burner 31 comprises a tubular casing 42 with a downstream portion 46 surrounding the downstream portion 36 of the lance 35 and defining an annular cavity 40 around the lance 35. According to figure 4, the outer surface of the lance 35 is provided with a plurality of streamline bodies 44 configured for generating an axial swirl S starting from an axial air feeding 32 in the cavity 40. In this example, the gas fuel injecting holes are obtained at the streamline bodies 44. The lance tip 37 is provided with two spark generators 45 protruding the lance tip surface towards the combustion chamber.

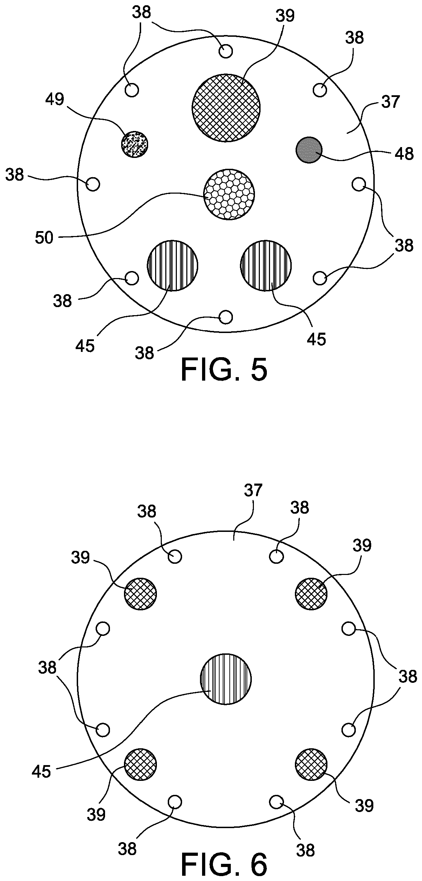

Reference is now made to figures 5 and 6 that are schematic views of two examples of lance tips according to the invention. In the example of figure 5, the lance tip 37 is provided with two spark generators 45, an oil fuel injector 39, a flame sensor 50, a pressure sensor 49, a temperature sensor 48 and a plurality of gas fuel injecting holes 38. In the example of figure 6, the lance tip 37 is provided with a spark generator 45, four oil fuel injectors 39 and a plurality of gas fuel injecting holes 38.

## Claims

1. Sequential can combustor for a gas turbine (1), the sequential can combustor (4) having an axis and comprising in series:
- a first burner (5, 20, 30);
- a first combustion chamber (6, 21, 34)
- a second burner (22);
- a second combustion chamber (23);
- a transition duct (26);
the first burner (30) having an axis (10) corresponding to the main axial air/gas direction and comprising:
- an inlet (32) fed by compressed air;
- an outlet (33) facing a combustion chamber (34);
- a bluff body lance (35) extending along the axis (10) and having a downstream portion (36) with a tip (37) substantially at the burner outlet (33);
- at least a fuel injector (38, 39) for injecting fuel in the air flow;
- an annular cavity (40) between at least the lance downstream portion (36) and a casing (41, 42);
- a swirl generator (43, 44) for generating in the annular cavity (40) an axial swirl flow (S) of air or mixture air and fuel;
wherein the casing (41) comprises a downstream portion (46) connectable with the combustion chamber and having a V diverging shape; along the axis (10) the lance tip (37) being in a recessed position with respect to the downstream edge (47) of the downstream portion (46) of the outer casing;
**characterised in that** the burner (30, 31) further comprises at least a spark generator (45) at the lance tip (37);
wherein along the axis (10) the spark generator (45) is protruding the lance tip (37);
wherein the lance tip (37) is provided with a temperature sensor (48) and/or a pressure sensor (49) and/or a flame sensor (50).

2. Sequential can combustor as claimed in claim 1, wherein the swirl generator (43, 44) comprises a plurality of streamline bodies (44) configured for swirling the compressed air passing through the annular cavity (40), the streamline bodies (44) being connected to the outer surface of the lance (35) and/or to the inner surface of the casing (42).

3. Sequential can combustor as claimed in claim 1 or 2, wherein the casing (41) comprises an intermediate portion (43) configured for acting as a swirl generator for swirling the compressed air passing through the casing (41).

4. Sequential can combustor as claimed in any one of the foregoing claim, wherein the fuel injector (38, 39) is arranged at the lance tip (37) and/or at the outer casing (41) facing the cavity (40) and/or at the connected to the swirl generator (44) facing the cavity (40).

5. Sequential can combustor as claimed in any one of the foregoing claim, wherein the fuel injector comprises at least a gas fuel injector (38) and/or at least an oil fuel injector (39).

6. A gas turbine for power plant; the gas turbine (1) having an axis (9) and comprising following the gas flow direction:
- a compressor sector (2) for compressing ambient air,
- a combustor sector (4) for mixing and combusting the compressed with at least a fuel
- at least a turbine sector (3) for expanding the combusted hot gas flow leaving the combustors (4) and performing work on a rotor (8);
wherein the combustor sector (4) comprises at least a sequential can combustor according to any one of the foregoing claims.

## Patentansprüche

1. Mehrstufige Rohrbrennkammer für eine Gasturbine (1), wobei die mehrstufige Rohrbrennkammer (4) eine Achse aufweist und in Reihe Folgendes umfasst:
- einen ersten Brenner (5, 20, 30);
- eine erste Verbrennungskammer (6, 21, 34);
- einen zweiten Brenner (22);
- eine zweite Verbrennungsammer (23);
- einen Übergangskanal (26);
wobei der erste Brenner (30) eine Achse (10) aufweist, die der axialen Haupt-Luft/Gasrichtung entspricht und Folgendes umfasst:
- einen Einlass (32), dem Druckluft zugeführt wird;
- einen Auslass (33), der einer Verbrennungskammer (34) zugewandt ist;
- eine Störkörperlanze (35), die sich entlang der Achse (10) erstreckt und einen stromabwärtigen Abschnitt (36) mit einer Spitze (37) im Wesentlichen am Brennerauslass (33) aufweist;
- mindestens eine Brennstoff-Einspritzdüse (38, 39) zum Einspritzen von Brennstoff in die Luftströmung;
- einen ringförmigen Hohlraum (40) zwischen mindestens dem stromabwärtigen Lanzenabschnitt (36) und einem Gehäuse (41, 42);
- einen Wirbelerzeuger (43, 44) zum Erzeugen einer axialen Wirbelströmung (S) von Luft oder Luft-Brennstoff-Gemisch in dem ringförmigen Hohlraum (40);
wobei das Gehäuse (41) einen stromabwärtigen Abschnitt (46) umfasst, der mit der Verbrennungskammer verbindbar ist und eine V-förmig auseinanderlaufende Form aufweist; wobei entlang der Achse (10) die Lanzenspitze (37) sich in einer in Bezug auf den stromabwärtigen Rand (47) des stromabwärtigen Abschnitts (46) des äußeren Gehäuses vertieften Position befindet;
**dadurch gekennzeichnet, dass** der Brenner (30, 31) ferner mindestens einen Funkenerzeuger (45) an der Lanzenspitze (37) umfasst;
wobei der Funkenerzeuger (45) entlang der Achse (10) von der Lanzenspitze (37) hervorsteht;
wobei die Lanzenspitze (37) mit einem Temperatursensor (48) und/oder einem Drucksensor (49) und/oder einem Flammensensor (50) versehen ist.

2. Mehrstufige Rohrbrennkammer nach Anspruch 1, wobei der Wirbelerzeuger (43, 44) eine Vielzahl von Stromlinienkörpern (44) umfasst, die zum Wirbeln der Druckluft ausgestaltet sind, die den ringförmigen Hohlraum (40) durchquert, wobei die Stromlinienkörper (44) mit der äußeren Oberfläche der Lanze (35) und/oder mit der inneren Oberfläche des Gehäuses (42) verbunden sind.

3. Mehrstufige Rohrbrennkammer nach Anspruch 1 oder 2, wobei das Gehäuse (41) einen Zwischenabschnitt (43) umfasst, der dazu ausgestaltet ist, als ein Wirbelerzeuger zum Wirbeln der Druckluft zu wirken, die das Gehäuse (41) durchquert.

4. Mehrstufige Rohrbrennkammer nach einem der vorhergehenden Ansprüche, wobei die Brennstoff-Einspritzdüse (38, 39) an der Lanzenspitze (37) und/oder am äußeren Gehäuse (41) dem Hohlraum (40) zugewandt angeordnet und/oder mit dem Wirbelerzeuger (44) dem Hohlraum (40) zugewandt verbunden ist.

5. Mehrstufige Rohrbrennkammer nach einem der vorhergehenden Ansprüche, wobei die Brennstoff-Einspritzdüse mindestens eine Gasbrennstoff-Einspritzdüse (38) und/oder mindestens eine Ölbrennstoff-Einspritzdüse (39) umfasst.

6. Gasturbine für ein Kraftwerk; wobei die Gasturbine (1) eine Achse (9) aufweist und, der Gasströmungsrichtung folgend, Folgendes umfasst:
- einen Verdichtersektor (2) zum Verdichten von Umgebungsluft,
- einen Brennkammersektor (4) zum Mischen und Verbrennen der Druckluft mit mindestens einem Brennstoff;
- mindestens einen Turbinensektor (3) zum Expandieren der verbrannten Heißgasströmung, welche die Brennkammern (4) verlässt und Arbeit auf einem Rotor (8) durchführt;
wobei der Brennkammersektor (4) mindestens eine mehrstufige Rohrbrennkammer nach einem der vorhergehenden Ansprüche umfasst.

## Revendications

1. Dispositif de combustion tubulaire séquentiel pour une turbine à gaz (1), le dispositif de combustion tubulaire séquentiel (4) ayant un axe et comprenant en série:
- un premier brûleur (5, 20, 30);
- une première chambre de combustion (6, 21, 34)
- un deuxième brûleur (22);
- une deuxième chambre de combustion (23);
- un conduit de transition (26);
le premier brûleur (30) ayant un axe (10) correspondant à la direction axiale principale air/gaz et comprenant:
- une entrée (32) alimentée par de l'air comprimé;
- une sortie (33) faisant face à une chambre de combustion (34);
- une lance à corps non profilé (35) s'étendant le long de l'axe (10) et ayant une partie aval (36) avec une pointe (37) sensiblement au niveau de la sortie de brûleur (33);
- au moins un injecteur de combustible (38, 39) pour injecter du combustible dans le flux d'air;
- une cavité annulaire (40) entre au moins la partie aval de la lance (36) et un boîtier (41, 42);
- un générateur de tourbillons (43, 44) pour générer dans la cavité annulaire (40) un flux tourbillonnaire axial (S) d'air ou de mélange d'air et de combustible;
dans lequel le boîtier (41) comprend une partie aval (46) pouvant être reliée à la chambre de combustion et ayant une forme divergente en V; le long de l'axe (10) la pointe de lance (37) étant dans une position en retrait par rapport au bord aval (47) de la partie aval (46) du boîtier extérieur;
**caractérisé en ce que** le brûleur (30, 31) comprend en outre au moins un générateur d'étincelles (45) au niveau de la pointe de lance (37);
dans lequel le long de l'axe (10) le générateur d'étincelles (45) fait saillie de la pointe de lance (37);
dans lequel la pointe de lance (37) est pourvue d'un capteur de température (48) et/ou d'un capteur de pression (49) et/ou d'un capteur de flamme (50).

2. Dispositif de combustion tubulaire séquentiel selon la revendication 1, dans lequel le générateur de tourbillons (43, 44) comprend une pluralité de corps aérodynamiques (44) configurés pour faire tourbillonner l'air comprimé traversant la cavité annulaire (40), les corps profilés (44) étant reliés à la surface extérieure de la lance (35) et/ou à la surface intérieure du boîtier (42).

3. Dispositif de combustion tubulaire séquentiel selon la revendication 1 ou 2, dans lequel le boîtier (41) comprend une partie intermédiaire (43) configurée pour agir comme un générateur de tourbillons pour faire tourbillonner l'air comprimé traversant le boîtier (41).

4. Dispositif de combustion tubulaire séquentiel selon l'une quelconque des revendications précédentes, dans lequel l'injecteur de combustible (38, 39) est disposé au niveau de la pointe de lance (37) et/ou au niveau du boîtier extérieur (41) faisant face à la cavité (40) et/ou relié au générateur de tourbillons (44) faisant face à la cavité (40).

5. Dispositif de combustion tubulaire séquentiel selon l'une quelconque des revendications précédentes, dans lequel l'injecteur de combustible comprend au moins un injecteur de combustible gazeux (38) et/ou au moins un injecteur de combustible huileux (39).

6. Turbine à gaz pour centrale électrique; la turbine à gaz (1) ayant un axe (9) et comprenant, suivant la direction du flux de gaz:
- un secteur de compresseur (2) pour comprimer l'air ambiant,
- un secteur de dispositif de combustion (4) pour mélanger et brûler l'air comprimé avec au moins un combustible
- au moins un secteur de turbine (3) pour détendre le flux de gaz chauds brûlés quittant les dispositifs de combustion (4) et produisant un travail sur un rotor (8);
dans laquelle le secteur de combustion (4) comprend au moins un dispositif de combustion tubulaire séquentiel selon l'une quelconque des revendications précédentes.
